(19) Europäisches Patentamt

European Patent Office

Office européen des brevets

(11) **EP 0 817 005 A1**

## (12) EUROPEAN PATENT APPLICATION

(43) Date of publication:
07.01.1998 Bulletin 1998/02

(51) Int. Cl.$^6$: **G06F 7/544**, G06F 7/52

(21) Application number: 97110458.3

(22) Date of filing: 26.06.1997

(84) Designated Contracting States:
AT BE CH DE DK ES FI FR GB GR IE IT LI LU MC NL PT SE

(30) Priority: 27.06.1996 JP 167395/96

(71) Applicant: NEC CORPORATION
Tokyo (JP)

(72) Inventor:
Tsubakihara, Masahiro,
NEC IC Microcomputer
Nakahara-ku, Kawasaki-shi, Kanagawa (JP)

(74) Representative: Betten & Resch
Reichenbachstrasse 19
80469 München (DE)

### (54) Product sum operation processing method and apparatus

(57) In a multiplication process, an operation process applied to a multiplicand is changed in accordance with a selection command for an addition/subtraction selecting signal to generate partial products of a multiplier and the multiplicand, and the partial products and an augend/minuend are added together, thereby ensuring that an adder dedicated to addition/subtraction is unneeded, the circuit scale can be reduced and the operation can be carried out at a high speed.

F I G. 1

EP 0 817 005 A1

## Description

### Background of the Invention

The present invention relates to product sum operation processing methods and more particularly, to product sum operation processing method and apparatus generally used for multiplication of digital numbers with signs.

The product sum operation is indicated by the following formula:

$$Y = C \pm (A_i \times B_i) \tag{1}$$

where $A_i$ represents a multiplier, $B_i$ represents a multiplicand, C represents an augend/minuend and Y a product sum operation result. Usually, either addition or subtraction is selected.

Conventionally, in order to perform multiplication at a high speed and with a small circuit scale so as to realize the above product sum operation, a technique which improves Booth coding, called improved Booth coding, has been used. The improved Booth coding is widely known as a high-speed multiplication method and is described in, for example, "Electronic Computer 2" by Hajime Iizuka, pp.31-33, Corona-sha, 1990. In the improved Booth algorithm, even digits j of a multiplier are picked up so that the multiplier may be divided by 3 bits which correspond to each digit j, the preceding digit j+1 and the succeeding digit j-1 to determine partial multipliers $(PA_i)_j$ each being of 3 bits, the whole of a multiplicand is shifted in accordance with values of the individual partial multipliers to determine partial products (hereinafter referred to as sub-partial products) of the partial multipliers and the results of shift operation of the whole of the multiplicand, and the thus determined sub-partial products are mutually added to determine a result of multiplication $(A_i \times B_i)$.

Referring to Table 1 showing the contents of shift operation of the whole of a multiplicand $B_i$, a partial multiplier $(PA_i)_j$ has a central digit value j which represents an even digit of a multiplier $A_i$, a digit value j-1 of a digit which precedes the central digit and a digit value j+1 of a digit which succeeds the central digit and the execution contents of the shift operation carried out for the whole of the multiplicand is shown in a column of "execution calculation". For example, when the partial multiplier picked up from the multiplier $A_i$ has a value of 011 (binary), the shift operation for doubling the multiplicand $B_i$ is carried out for the whole of the multiplicand $B_i$. Since j is even, the number of partial multipliers $(PA_i)_j$ is half the number of digits (or digits - 1 for odd number) of the multiplier $A_i$.

Table 1

| Digital of Partial Multiplier (j : even) | | | Execution Calculation +(Ai + Bi) |
|---|---|---|---|
| j+1 | j | j-1 | |
| 0 | 0 | 0 | 0 times |
| 0 | 0 | 1 | 1 times |
| 0 | 1 | 0 | 1 times |
| 0 | 1 | 1 | 2 times |
| 1 | 0 | 0 | -2 times |
| 1 | 0 | 1 | -1 times |
| 1 | 1 | 0 | -1 times |
| 1 | 1 | 1 | 0 times |

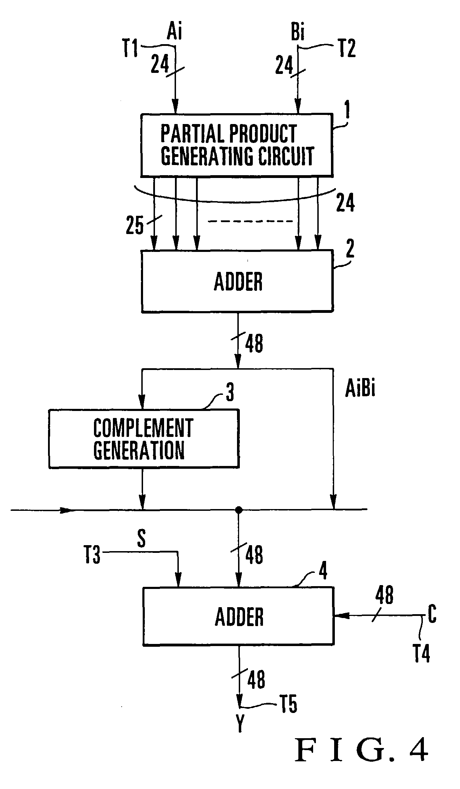

Referring now to Fig. 4, a conventional product sum operation processing apparatus for execution of the above operation is illustrated in block diagram form. The conventional product sum operation processing apparatus has a partial product generating circuit 1 which receives a multiplier $A_i$ from a multiplier input terminal T1 and a multiplicand $B_i$ from a multiplicand input terminal T2 to generate partial products, an adder circuit 2 which performs multiplication ($A_i \times B_i$) by mutually adding the partial products, a complement generating circuit 3 for generating complements of results of multiplication ($A_i \times B_i$), and an adder 4 which selects either addition or subtraction of an augend/minuend C supplied from a terminal T4 to or from the results of multiplication ($A_i \times B_i$) in accordance with the value of an addition/subtraction selecting signal S supplied from a terminal T3 and performs either addition or subtraction of the two inputs to deliver a product sum operation result Y from an output terminal T5.

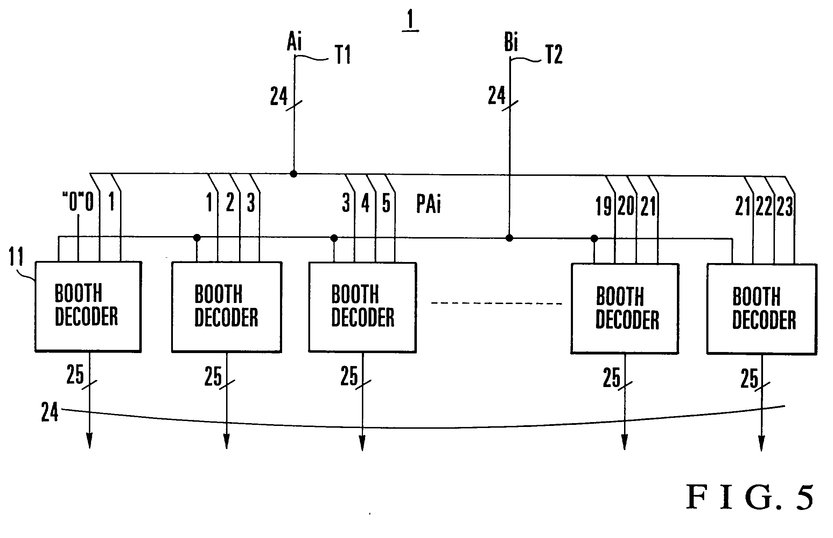

The partial product generating circuit 1 based on the improved Booth coding is constructed as illustrated in block form in Fig. 5. As shown, the partial product generating circuit 1 has a plurality of Booth decoders 11 which pick up even digits of the multiplier Ai so as to generate sub-partial products of partial multipliers (PAi)j and the multiplicand Bi, each partial multiplier having 3 bits corresponding to the even central digit, the preceding digit and the succeeding digit.

Referring now to Figs. 4 and 5, the operation of the conventional product sum operation processing apparatus will be described. Firstly, the partial product generating circuit 1 receives the multiplier Ai inputted from the multiplier input terminal T1 and the multiplicand Bi inputted from the multiplicand input terminal T2, picks up even digits of the multiplier Ai to generate partial multipliers (PAi)j each having 3 bits corresponding to the even central digit, the preceding digit and the succeeding digit, and supplies the individual partial multipliers and the multiplicand Bi to the respective Booth decoders 11 to determine sub-partial products based on the previously-described partial product operation method. The thus determined sub-partial products are delivered to the adder 2. In the adder 2, the sub-partial products are added together to determine a result of multiplication (Ai × Bi).

Next, selection of addition or subtraction of the augend/minuend C to or from the result of multiplication (Ai × Bi) is carried out in accordance with the addition/subtraction selecting signal S supplied from the terminal T3. When addition is selected by the addition/subtraction selecting signal S, the result of multiplication (Ai × Bi) is supplied to the adder 4 without alteration. When subtraction is selected, the complement generating circuit 3 generates a complement (-Ai × Bi) of the result of multiplication (Ai × Bi) and delivers it to the adder 4. Through the above selecting process, distinction between addition and subtraction to and from the augend/minuend C is not required to be effected by the adder 4, and the adder 4 adds one of the two inputs, that is, the result of multiplication (Ai × Bi) or the complement (-Ai × Bi) and the augend/minuend C supplied from the terminal T4 to deliver a product sum operation result Y through an output terminal T5.

In the conventional product sum operation processing apparatus, however, there need the complement generating circuit 3 for determining the complement (-Ai × Bi) of the multiplication result when the subtraction is selected and the adder 4 for performing only addition/subtraction to and from the augend/minuend C, thus increasing the circuit scale.

Specifically, when each of the multiplier Ai and the multiplicand Bi has 24 bits and the above calculation formula as it is is simply executed with a circuit, the circuit has a large scale of 31660 transistors. An addition processing circuit constructed of the adder and the complement generating circuit in combination has a circuit scale which occupies about 20980 transistors.

Thus, in the aforementioned conventional product sum operation processing method, the complement generating circuit for determining the complement of a multiplication result when subtraction is selected and the adder for performing only addition/subtraction to and from the augend/minuend are needed and disadvantageously, the circuit scale is increased.

<u>Summary of the Invention</u>

An object of the present invention is to provide a product sum operation processing method which can reduce the circuit scale by dispensing with the complement generating circuit and the adder dedicated to addition/subtraction and which can perform high-speed operations.

To accomplish the above object, according to the present invention, in a product sum operation processing method in which a multiplication process for multiplying an input multiplier by an input multiplicand is carried out to obtain a multiplication result and either addition or subtraction process selected in accordance with a selection command for an addition/subtraction selecting signal is applied to the multiplication result and an augend/minuend,

an operation process applied to the multiplicand is changed in accordance with the selection command and partial products of the multiplier and the thus changed multiplicand are generated in the multiplication process, and the partial products and the augend/minuend are added together.

According to the present invention, a product sum operation processing apparatus in which a multiplication process for multiplying a multiplier by multiplicand is carried out to deliver a multiplication result and either addition or subtraction process selected in accordance with a selection command for an addition/subtraction selecting signal is applied to the multiplication result and an augend/minuend, comprises:

partial product generating means for changing an operation process applied to the multiplicand in accordance with the selection command and generating partial products of the multiplier and the thus changed multiplicand; and adder means for executing an addition process for generation of partial products and an addition process for addition of the partial products and the augend/minuend.

Brief Description of the Drawings

Fig. 1 is a block diagram of a product sum operation apparatus showing an embodiment of a product sum operation processing method according to the present invention.

Fig. 2 is a block diagram showing the construction of a partial product generating circuit in Fig. 1.

Fig. 3 is a flow chart showing an example of the operation of the present embodiment.

Fig. 4 is a block diagram showing an example of a conventional product sum operation processing method.

Fig. 5 is a block diagram showing the construction of a partial product generating circuit in Fig. 3.

Description of the Preferred Embodiments

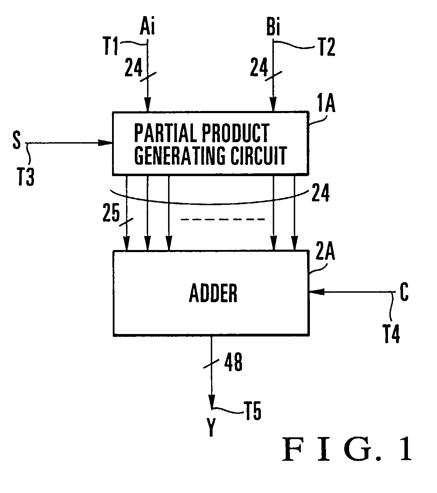

Referring now to Fig. 1, an embodiment of the present invention will be described. A product sum operation apparatus for execution of a product sum operation processing method according to the present embodiment is illustrated in block form in Fig. 1, having components similar to those of Fig. 4 which are designated by similar numerals. The product sum operation apparatus comprises a partial product generating circuit 1A, in place of the partial product generating circuit 1, which receives an addition/subtraction selecting signal S and applies to a multiplicand a shift operation which takes a 2' complement into consideration in accordance with a value of the signal S so as to generate partial products, and an adder 2A, in place of the adder 2, which receives an augend/minuend C and adds the augend/minuend C to the partial products to generate a product sum operation result Y which in turn is delivered through an output terminal T5.

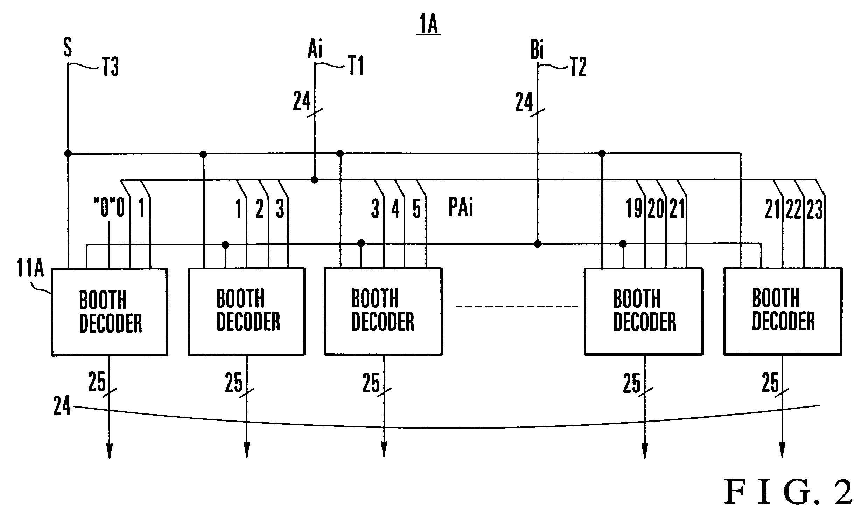

Referring to Fig. 2 showing in block form the construction of the partial product generating circuit 1A based on the improved Booth coding, the partial product generating circuit 1A includes a plurality of booth decoders 11A which pick up, under the control of the augend/minuend selecting signal S, even digits of the multiplier Ai to generate partial products (hereinafter referred to as sub-partial products) of partial multipliers (PAi)j and the multiplicand Bi, each of the partial multipliers (PAi)j having 3 bits corresponding to the even central digit, the preceding digit and the succeeding digit.

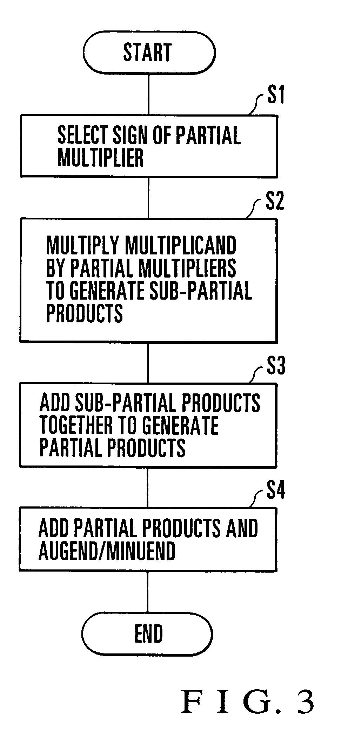

Next, referring to Fig. 3 showing a flow chart of the processing by the present embodiment, the operation of the present embodiment will be described. For convenience of explanation, the 4 bits × 4 bits product sum operation processing will be described herein.

Firstly, a multiplier Ai and a multiplicand Bi are inputted to the multiplier input terminal T1 and the multiplicand input terminal T2, respectively. The partial product generating circuit 1A delivers subpartial products by using the improved Booth coding as in the case of the conventional apparatus but when subtraction is selected by the addition/subtraction selecting signal S during the generation of sub-partial products, the partial product generating circuit 1A applies to the multiplicand Bi a shift operation which takes a 2' complement into consideration (steps S1 to S3).

Table 2

| Digital of Partial Multiplier (j : even) | | | Execution calculation upon addition selection +(Ai + Bi) | Execution calculation upon subtraction selection -(Ai + Bi) |
|---|---|---|---|---|
| j+1 | j | j-1 | | |
| 0 | 0 | 0 | 0 times | 0 times |
| 0 | 0 | 1 | 1 times | -1 times |
| 0 | 1 | 0 | 1 times | -1 times |
| 0 | 1 | 1 | 2 times | -2 times |
| 1 | 0 | 0 | -2 times | 2 times |
| 1 | 0 | 1 | -1 times | 1 times |
| 1 | 1 | 0 | -1 times | 1 times |
| 1 | 1 | 1 | 0 times | 0 times |

Referring to Table 2 showing the contents of the shift operation carried out for the whole of the multiplicand Bi, a partial multiplier (PAi)j has a value j of a central digit which represents an even digit of the multiplier Ai, a value j-1 of a digit which precedes the central digit and a value j+1 of a digit which succeeds the central digit as in the case of the conventional apparatus. In the shift operation carried out for the whole of the multiplicand Bi in accordance with values of the individual partial multipliers (PAi)j, the contents of the shift operation when the addition/subtraction selecting signal S selects addition is shown in a column of "execution calculation upon addition selection" and the contents of the shift operation when subtraction is selected is shown in a column of "execution calculation upon subtraction selection". For example, when the partial multiplier (PAi)j has a value of "100", the shift operation is so effected as to multiply the multiplicand Bi by -2 in the usual improved Booth coding but in the case where subtraction is selected by the addition/subtraction selecting signal S, the shift operation is so effected as to multiply the multiplicand Bi by 2. In other words, the same effect as that of inverting the first bit or sign of the partial multiplier (PAi)j can be obtained. The adder 2A adds partial products delivered out of the partial product generating circuit 1A and an augend/minuend C inputted from the augend/minuend input terminal T3 (step S4) and delivers a product sum operation result Y through the output terminal T5.

Referring to Fig. 2, the operation of the partial product generating circuit 1A will be described. Three bits, that is, each even digit, the preceding digit and the succeeding digit of the input multiplier Ai are picked up (2 bits for only the least significant bit stage) to determine partial multipliers and the thus determined partial multipliers are supplied, along with the addition/subtraction selecting signal S and the multiplicand Bi, to the Booth decoders 11A which apply an operation process to the multiplicand Bi. The operation of the partial product generating circuit 1A will now be described by taking an instance where a multiplier Ai of "0011" and a multiplicand Bi of "0111" are inputted, for simplicity of explanation.

When the addition/subtraction selecting signal S selects subtraction, sub-partial product processing is executed as below. In a stage in which the value of the partial multiplier (PAi)j of multiplier Ai is "110" (j+1, j, j-1), the multiplicand Bi, which will otherwise be multiplied by -1 in the known improved Booth coding to assume a value of "1001", is multiplied by 1 to assume a value of "0111" in the present embodiment because subtraction is selected by the addition/subtraction signal S and the sign of the partial multiplier is inverted to invert the sign of the multiple applied to the multiplicand as shown in the conversion Table 2. Similarly, in a stage in which the value of the partial multiplier (PAi)j is "001", the sub-partial processing is such that the multiplicand Bi which will usually be multiplied by 1 is multiplied by - 1 in the present embodiment to assume a value of "1001".

As described above, the adder of the present embodiment can be reduced in circuit scale because the complement generating circuit and the adder dedicated to addition/subtraction to and from the augend/minuend can be dispensed with. The circuit scale of the adder 2A of the present embodiment is larger than that of each of the conventional adders 2 and 4 but is smaller than the scale of a circuit of the two adders 2 and 4 in combination and as a result, the overall circuit scale can be reduced. For a product sum operation apparatus of 24 bits × 24 bits like the conventional one, the conventional addition processing circuit having the adder and the complement generating circuit in combination has a circuit scale of about 20980 transistors as described previously but in the present embodiment, the circuit scale can be reduced to about 18430. Accordingly, the circuit scale of the overall product sum operation apparatus can be reduced by about 8% of the conventional scale of about 31660 transistors, amounting to about 29100 transistors.

Further, the path routing through the complement generating circuit and the adder dedicated to addition/subtraction to and from the augend/minuend can be unneeded and consequently, the operation speed can be improved. It is estimated that the operation speed can be improved by about 20 %.

As described above, in the product sum operation processing method according to the present invention, in the multiplication process, the operation process applied to the multiplicand is changed in accordance with the addition/subtraction selecting command to generate partial products corresponding to either addition or subtraction and the partial products and the augend/minuend are added together, so that the complement generating circuit and the adder dedicated to addition/subtraction to and from the augend/minuend can be dispensed with and the circuit scale of the operation apparatus can be reduced to advantage.

Further, the path routing through the complement generating circuit and the adder dedicated to addition/subtraction to and from the augend/minuend can be unneeded and consequently, the operation speed can advantageously be improved.

**Claims**

1.  A product sum operation processing method in which a multiplication process for multiplying an input multiplier by an input multiplicand is carried out to obtain a multiplication result and either addition or subtraction process selected in accordance with a selection command for an addition/subtraction selecting signal is applied to said multiplication result and an augend/minuend, comprising the steps of:

    changing an operation process applied to said multiplicand in accordance with the selection command and generating partial products of said multiplier and the thus changed multiplicand in said multiplication process; and
    adding said partial products and said augend/minuend together to produce a product sum.

2.  A product sum operation processing method according to claim 1, wherein the process of generating said partial products uses improved Booth coding in which even digits of said multiplier are picked up to generate a plurality of partial multipliers each having an even central digit, the preceding digit and the succeeding digit, a shift operation is applied to the whole of said multiplicand in accordance with values of the individual partial multipliers to determine sub-partial products of said partial multipliers and results of the shift operation applied to the whole of said multiplicand, and said sub-partial products are added together.

3.  A product sum operation processing method according to claim 1, wherein in said addition process, an addition process for generation of said partial products and an addition process for generation of the product sum are carried out.

4.  A product sum operation processing method according to claim 1 or 2, wherein in the selection of either addition or subtraction carried out in accordance with said selecting command, the sign of a multiple applied to said multiplicand is inverted by inverting the sign of said partial multipliers.

5.  A product sum operation processing method according to claim 1 or 2, comprising the steps of:

    selecting the sign of said partial multipliers, by which said multiplicand is multiplied, in accordance with a selecting command of said addition/subtraction selecting signal;
    multiplying said partial multipliers by said multiplicand to generate sub-partial products;
    adding said sub-partial products mutually to generate partial products which are results of multiplication of said multiplier by said multiplicand; and
    adding said partial products and said augend/minuend together.

6.  A product sum operation processing apparatus in which a multiplication process for multiplying a multiplier by a multiplicand is carried out to deliver a multiplication result and either addition or subtraction process selected in accordance with a selection command for an addition/subtraction selecting signal is applied to said multiplication result and an augend/minuend, comprising:

    partial product generating means for changing an operation process applied to said multiplicand in accordance with said selection command and generating partial products of said multiplier and said changed multiplicand; and
    adder means for executing an addition process for generation of partial products and an addition process for addition to said augend/minuend.

F I G. 1

F I G. 2

EP 0 817 005 A1

START

S1

SELECT SIGN OF PARTIAL
MULTIPLIER

S2

MULTIPLY MULTIPLICAND
BY PARTIAL MULTIPLIERS
TO GENERATE SUB-PARTIAL
PRODUCTS

S3

ADD SUB-PARTIAL PRODUCTS
TOGETHER TO GENERATE
PARTIAL PRODUCTS

S4

AOD PARTIAL PRODUCTS AND
AUGEND/MINUEND

END

F I G. 3

F I G. 4

F I G. 5

| European Patent Office | EUROPEAN SEARCH REPORT | Application Number EP 97 11 0458 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 497 622 A (NEC) <br> * page 3, line 3 - line 46; figures 1,2 * <br> --- | 1-6 | G06F7/544 <br> G06F7/52 |
| X | US 4 813 008 A (SHIGEHARA) <br> * abstract * <br> * column 9, line 29 - column 11, line 18; figures 14-19 * <br> ----- | 1-6 | |

TECHNICAL FIELDS SEARCHED (Int.Cl.6)

G06F

The present search report has been drawn up for all claims

| Place of search | Date of completion of the search | Examiner |
|---|---|---|
| THE HAGUE | 29 August 1997 | Cohen, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)